# EUROPEAN PATENT APPLICATION

(11) **EP 4 711 918 A1**
(43) Date of publication of application: **18.03.2026**
(21) Application number: 25201567.2
(22) Date of filing: 11.09.2025
(51) Int. Cl.: G06F 8/65, H04L 67/56, G05B 19/042

(54) **RELAY APPARATUS, RELAY METHOD, AND RELAY PROGRAM TO UPDATE THE SOFTWARE OF FIELD DEVICES**

(30) Priority: 17.09.2024 JP 2024160224
(71) Applicant: Yokogawa Electric Corporation, Tokyo 180-8750 (JP)
(72) Inventor: SHINGU, Oki, Musashino-shi, Tokyo, 180-8750, (JP)
(74) Representative: Winter, Brandl - Partnerschaft mbB

(57) **Abstract**

The relay apparatus (100) includes a first communication unit (110) that communicates with a first device that is connected to a first link, a second communication unit (120) that communicates with a second device that is connected to a second link, a communication control unit (150) that receives, from the first device, software that is to be transmitted to the second device, and stores the received software in a storage unit (140), and an update control unit (160) that updates software of the second device by transmitting the software that is stored in the storage unit (140) to the second device.

## Description

### FIELD

The present invention relates to a relay apparatus, a relay method, and a relay program.

### BACKGROUND

In a system of a conventional technology, a host and a field device are connected to each other by a link and a worker uses the host to acquire a sensor value that is measured by the field device (see, for example, Japanese Laid-open Patent Publication No. 2005-122591). Further, the worker uses the host to update software of the field device. Meanwhile, when a plurality of links are present, all of the links are connected to one another by using a relay apparatus.

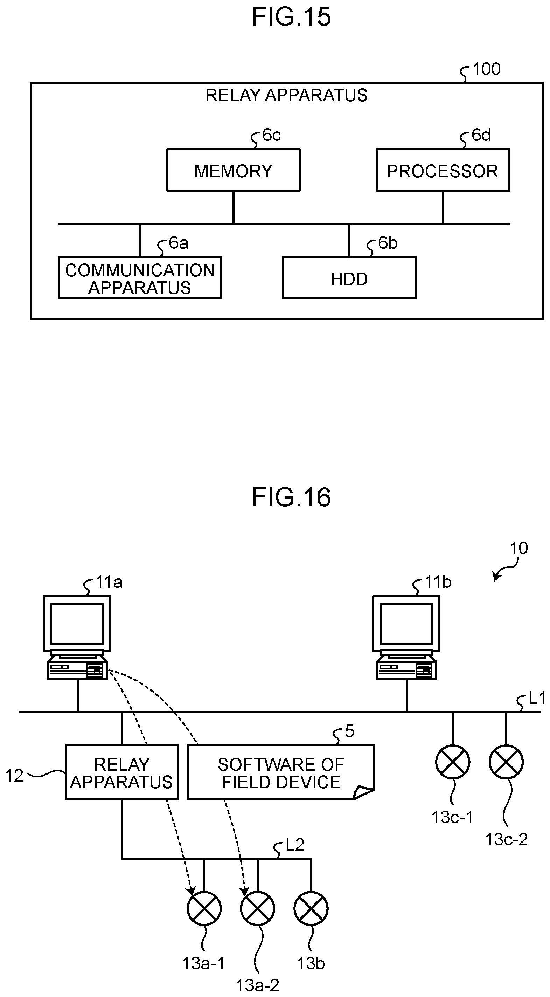

FIG. 16 is a diagram for explaining a system of the conventional technology. As illustrated in FIG. 16, a system 10 of the conventional technology includes hosts 11a and 11b, a relay apparatus 12, and field devices 13a-1, 13a-2, 13b, 13c-1, and 13c-2. The hosts 11a and 11b, the relay apparatus 12, and the field devices 13c-1 and 13c-2 are connected to a first link L1. The relay apparatus 12 and the field devices 13a-1, 13a-2, and 13b are connected to a second link L2.

The hosts 11a and 11b are Personal Computers (PCs) that are used by a worker, acquire sensor values form the field devices 13a-1, 13a-2, 13b, 13c-1, and 13c-2, and update software. The field devices 13a-1, 13a-2, 13b, 13c-1, and 13c-2 are sensors or the like.

Meanwhile, the field devices 13a-1 and 13a-2 are the same field devices. The field devices 13c-1 and 13c-2 are the same field devices. In the following descriptions, the field devices 13a-1 and 13a-2 may collectively be referred to as a field device 13a as appropriate. The field devices 13c-1 and 13c-2 may collectively be referred to as a field device 13c as appropriate.

When the hosts 11a and 11b and the field device 13c that are connected to the first link L1 communicate with one another, the first link L1 is used. In contrast, when the hosts 11a and 11b and the field device 13c that are connected to the first link L1 communicate with the field devices 13a and 13b that are connected to the second link L2, communication is performed via the relay apparatus 12.

In general, a communication protocol and a communication speed are different between the first link L1 and the second link L2, and therefore, the relay apparatus 12 converts communication between the first link L1 and the second link L2. The relay apparatus 12 is an I/O device or the like.

For example, when the host 11a updates software of the field device 13a, the host 11a transmits download target software 5 to the field device 13a via the relay apparatus 12. Even when the field devices are the same, software update is performed for each of the field devices, and therefore, when the host 11a updates the field device 13a, the host 11a transmits the software 5 to each of the field devices 13a-1 and 13a-2.

In the conventional technology as described above, when a plurality of the same field devices are present, the download target software is transmitted to each of the field devices, and therefore, while the software is being transmitted, a communication bands of the first link L1 and the second link L2 are occupied due to the transmission of the software.

Therefore, for example, while the host 11a is updating the software of the field device 13a, communication of the hosts 11a and 11b and the field device 13c that are connected to the first link L1 is restricted, so that it is needed to reduce a communication amount of the entire system.

According to one aspect, an object is to provide a relay apparatus, a relay method, and a relay program capable of reducing a communication amount of the entire system.

### SUMMARY

According to an aspect of the embodiments, a relay apparatus includes receiving, from a first device that is connected to a first link, software that is to be transmitted to a second device that is connected to a second link, by using a first communication unit that communicates with the first device and by using a second communication unit that communicates with the second device, storing the received software in a storage unit, and updating software of the second device by transmitting the software that is stored in the storage unit to the second device.

According to an aspect of the embodiments, a relay method that is implemented by a computer, the relay method includes receiving, from a first device that is connected to a first link, software that is to be transmitted to a second device that is connected to a second link, by using a first communication unit that communicates with the first device and by using a second communication unit that communicates with the second device, storing the received software in a storage unit, and updating software of the second device by transmitting the software that is stored in the storage unit to the second device.

According to an aspect of the embodiments, a relay program that causes a computer to execute a process includes receiving, from a first device that is connected to a first link, software that is to be transmitted to a second device that is connected to a second link, by using a first communication unit that communicates with the first device and by using a second communication unit that communicates with the second device, storing the received software in a storage unit, and updating software of the second device by transmitting the software that is stored in the storage unit to the second device.

### BRIEF DESCRIPTION OF THE DRAWINGS

FIG. 1 is a functional block diagram illustrating a configuration of a relay apparatus of a conventional technology;
FIG. 2 is a first flowchart illustrating a software download process of the conventional technology;
FIG. 3 is a second flowchart illustrating the software download process of the conventional technology;
FIG. 4 is a diagram illustrating a system of a first embodiment;
FIG. 5 is a functional block diagram illustrating a functional configuration of a relay apparatus of the first embodiment;
FIG. 6 is a diagram illustrating an example of a data structure of a device list;
FIG. 7 is a first flowchart illustrating a software download process of the first embodiment;
FIG. 8 is a second flowchart illustrating the software download process of the first embodiment;
FIG. 9 is a diagram illustrating a system of a second embodiment;
FIG. 10 is a functional block diagram illustrating a functional configuration of a relay apparatus of the second embodiment;
FIG. 11 is a first flowchart illustrating a software download process of the second embodiment;
FIG. 12 is a second flowchart illustrating the software download process of the second embodiment;
FIG. 13 is a functional block diagram illustrating a relay apparatus according to a different embodiment;
FIG. 14 is a diagram illustrating an example of a data structure of a device list according to the different embodiment;
FIG. 15 is a diagram for explaining a hardware configuration example; and
FIG. 16 is a diagram for explaining a system of the conventional technology.

### DETAILED DESCRIPTION OF THE PREFERRED EMBODIMENTS

Embodiments of a relay apparatus, a relay method, and a relay program disclosed in the present application will be described in detail below based on the drawings. Meanwhile, the present invention is not limited by the embodiments below. Further, the same components are denoted by the same reference symbols, repeated explanation will be omitted appropriately, and the embodiments may be combined appropriately as long as no contradiction is derived.

### First embodiment

### Supplementary explanation of conventional technology

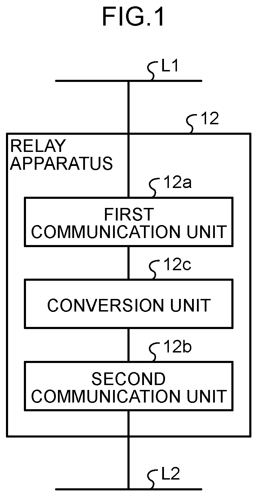

Supplementary explanation of the conventional technology will be given below before explanation of a first embodiment. First, a configuration example of the relay apparatus 12 illustrated in FIG. 16 will be described. FIG. 1 is a functional block diagram illustrating a configuration of the relay apparatus of the conventional technology.

As illustrated in FIG. 1, the relay apparatus 12 includes a first communication unit 12a, a second communication unit 12b, and a conversion unit 12c.

The first communication unit 12a communicates with the hosts 11a and 11b and the field device 13c that are connected to the first link L1 at a certain communication speed and by a certain communication protocol that are based on the PROFIBUS-DP or the like. When receiving data that is addressed to the field devices 13a and 13b of the second link L2, the first communication unit 12a outputs the received data to the conversion unit 12c.

The second communication unit 12b communicates with the field devices 13a and 13b that are connected to the second link L2 at a certain communication speed and by a certain communication protocol that are based on the PROFIBUS-PA or the like. When receiving data that is addressed to the hosts 11a and 11b and the field device 13c of the first link L1, the second communication unit 12b outputs the received data to the conversion unit 12c.

The conversion unit 12c converts communication between the first link L1 and the second link L2. For example, when receiving data from the first communication unit 12a, the conversion unit 12c converts a communication speed and a communication protocol of the data to a communication speed and a communication protocol of the second link L2, and outputs the data to the second communication unit 12b. In contrast, when receiving data from the second communication unit 12b, the conversion unit 12c converts a communication speed and a communication protocol of the data to a communication speed and a communication protocol of the first link L1, and outputs the data to the first communication unit 12a.

A software download process related to the system 10 illustrated in FIG. 16 will be described below. Here, a case will be descried in which the host 11a transmits software to the field device 13a. For example, in the software download process of the conventional technology, processes are performed at a first step, a second step, and a third step in this order.

The first step will be described. The host 11a transmits a command indicating a Download start instruction to the field device 13a. In the following descriptions, the command indicating the Download start instruction will be described as a "Download start instruction command". When receiving the command, the field device 13a performs a Download preparation. When the field device 13a completes the Download preparation, the host 11a goes to the second step.

The second step will be described. The host 11a transmits download target software to the field device 13a. The download target software has a large size and is not transmittable at once, and therefore, the host 11a divides the download target software into a plurality of communication frames and transmits the communication frames to the field device 13a. When transmission of the download target software is completed, the host 11a goes to the third step.

The third step will be described. The host 11a transmits a command indicating a change of the software to the field device 13a. In the following descriptions, the command indicating a change of the software will be described as a "software change command". When receiving the command, the field device 13a updates software of the field device 13a with the new software that is received at the second step and performs activation. From this time point, the field device 13a operates with the new software.

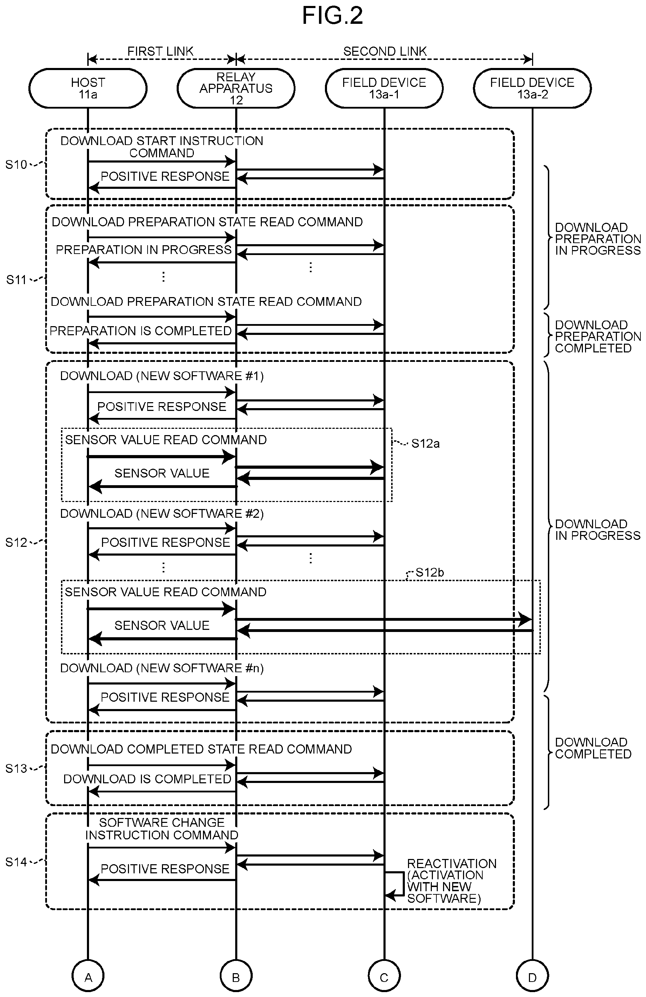

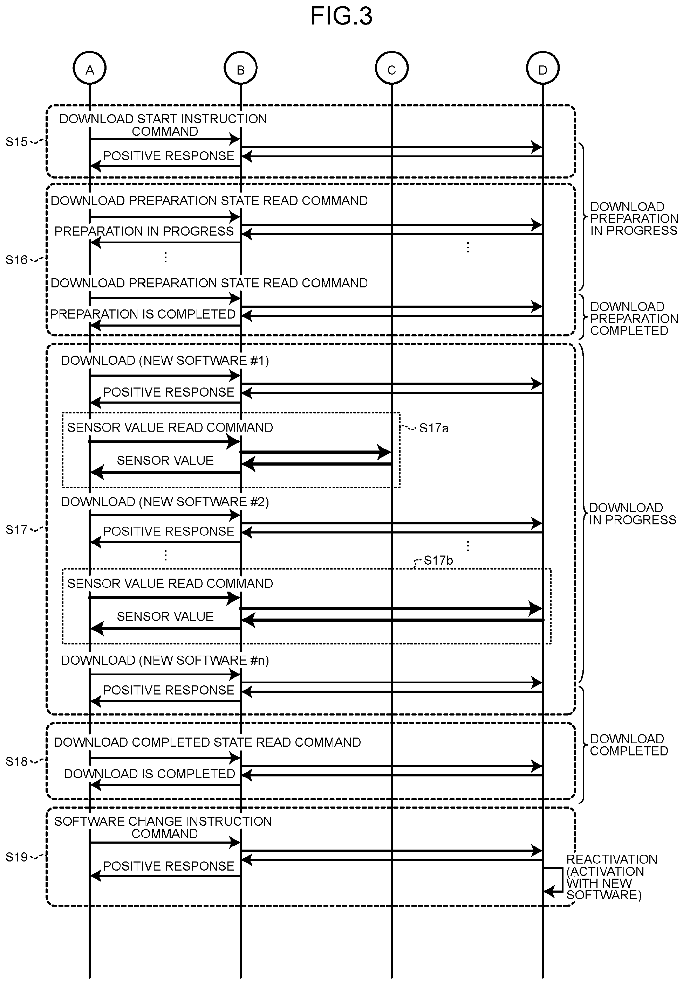

FIG. 2 and FIG. 3 are flowcharts illustrating the software download process of the conventional technology. In the examples illustrated in FIG. 2 and FIG. 3, a case will be described in which the host 11a transmits the download target software to the field device 13a. Meanwhile, a "Download preparation state Read command" illustrated in FIG. 2 and FIG. 3 indicates a command for inquiring of the field device about a state of the Download preparation state. A "sensor value Read command" indicates a command for inquiring of the field device about a sensor value. A "Download completion state Read command" indicates a command for inquiring of the field device about a Download completion state. Further, Download (new software #1) to Download (new software #n) indicate states in which divided pieces of download data are transmitted to the field device.

Explanation will be given below with reference to FIG. 2. The host 11a transmits a Download start instruction command to the field device 13a-1 via the relay apparatus 12. When receiving the Download start instruction command, the field device 13a-1 transmits a positive response to the host 11a via the relay apparatus 12, and performs a Download preparation (Step S10).

The host 11a repeats the process of transmitting the Download preparation state Read command to the field device 13a-1 via the relay apparatus 12 until the field device 13a-1 completes the Download preparation. When the Download preparation is completed, the field device 13a-1 transmits a positive response about preparation completion to the host 11a via the relay apparatus 12 (Step S11).

The host 11a, the field device 13a-1, and the field device 13a-2 transmit and receive various kinds of data via the relay apparatus 12; however, in explanation of Step S12 and subsequent steps, description of "via the relay apparatus 12" will be omitted. As described above, the relay apparatus 12 converts communication between the first link L1 and the second link L2.

When receiving the preparation completion from the field device 13a-1, the host 11a divides the download target software and transmits the divided pieces of software to the field device 13a-1. The field device 13a-1 transmits a positive response to the host 11a every time the field device 13a-1 receives the divided piece of software. The host 11a and the field device 13a-1 repeat the process as described above until transmission of the entire download target software is completed. When reception of the entire download target software is completed, the field device 13a-1 enters a Download completed state (Step S12).

When transmission of the entire download target software is completed, the host 11a transmits a Download completed state Read command to the field device 13a-1. When receiving the Download completed state Read command, the field device 13a-1 transmits Download completion to the host 11a (Step S13).

The host 11a transmits a software change instruction command to the field device 13a-1. When receiving the software change instruction command, the field device 13a-1 updates software of the field device 13a-1 with the new software and performs reactivation (Step S14).

Meanwhile, the host 11a performs a process of periodically acquiring sensor values from the field devices 13a-1 and 13a-2 while performing the process at Step S12. For example, the host 11a transmits the sensor value Read command to the field device 13a-1, and the field device 13a-1 transmits a sensor value to the host 11a (Step S12a). The host 11a transmits the sensor value Read command to the field device 13a-2, and the field device 13a-2 transmits a sensor value to the host 11a (Step S12b).

Explanation will be given below with reference to FIG. 3. The host 11a transmits the Download start instruction command to the field device 13a-2. When receiving the Download start instruction command, the field device 13a-2 transmits a positive response to the host 11a and performs a Download preparation (Step S15).

The host 11a repeats the process of transmitting the Download preparation state Read command to the field device 13a-1 until the field device 13a-2 completes the Download preparation. When the Download preparation is completed, the field device 13a-2 transmits a positive response about preparation completion to the host 11a (Step S16).

When receiving the preparation completion from the field device 13a-2, the host 11a divides the download target software and transmits the divided pieces of software to the field device 13a-2. The field device 13a-2 transmits a positive response to the host 11a every time the field device 13a-2 receives the divided piece of software. The host 11a and the field device 13a-2 repeat the process as described above until transmission of the entire download target software is completed. When reception of the entire download target software is completed, the field device 13a-2 enters the Download completed state (Step S17).

When transmission of the entire download target software is completed, the host 11a transmits the Download completed state Read command to the field device 13a-2. When receiving the Download completed state Read command, the field device 13a-2 transmits Download completion to the host 11a (Step S18).

The host 11a transmits the software change instruction command to the field device 13a-2. When receiving the software change instruction command, the field device 13a-2 updates software of the field device 13a-2 with the new software and performs reactivation (Step S19).

Meanwhile, the host 11a performs a process of periodically acquiring sensor values from the field devices 13a-1 and 13a-2 while performing the process at Step S17. For example, the host 11a transmits the sensor value Read command to the field device 13a-1, and the field device 13a-1 transmits a sensor value to the host 11a (Step S17a). The host 11a transmits the sensor value Read command to the field device 13a-2, the field device 13a-2 transmits a sensor value to the host 11a (Step S17b).

As described above, in the system 10 of the conventional technology, while the process at Step S12 in FIG. 2 is performed and while the process at Step S17 in FIG. 3 is performed, communication bands of the first link L1 and the second link L2 are occupied due to the transmission of the software.

Furthermore, even when a plurality of the same field devices are present, software download is performed for each of the field devices, so that the communication band of the first link L1 is occupied the same number of times as the number of devices for which the software download is performed. Therefore, a communication amount with respect to the host or the field device on the first link L1 is restricted, so that a communication loop on the first link L1 is affected.

Moreover, the software download takes time and is performed for each of the field devices, so that a load on the host increases. Therefore, it is often the case that the software download is performed while a control loop of the entire system that includes not only the second link L2, but also the first link L1 is stopped, so that a downtime increases.

### Explanation of system of first embodiment

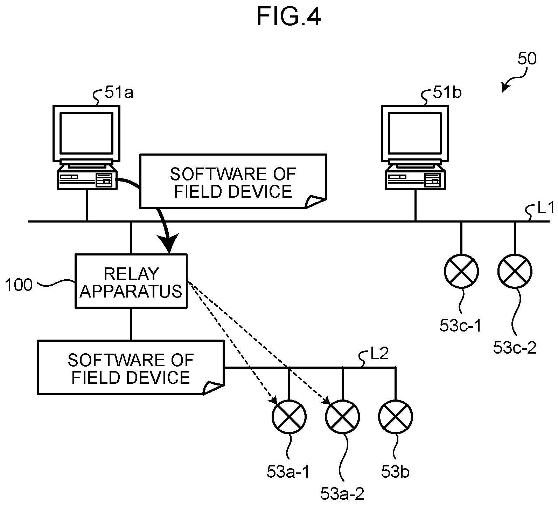

An example of a system of the first embodiment will be described below. FIG. 4 is a diagram illustrating the system of the first embodiment. As illustrated in FIG. 4, a system 50 of the first embodiment includes hosts 51a and 51b, a relay apparatus 100, and field devices 53a-1, 53a-2, 53b, 53c-1, and 53c-2. The hosts 51a and 51b, the relay apparatus 100, and the field devices 53c-1 and 53c-2 are connected to the first link L1. The relay apparatus 100 and the field devices 53a-1, 53a-2, and 53b are connected to the second link L2. Meanwhile, the "link" described herein indicates a circuit or a transmission path that is able to transmit and receive a signal and data.

The hosts 51a and 51b are PCs that are used by a worker, acquire sensor values from the field devices 53a-1, 53a-2, 53b, 53c-1, and 53c-2, and update software. The field devices 53a-1, 53a-2, 53b, 53c-1, and 53c-2 are sensor devices, operation devices, or the like that are installed in a plant or the like using oil, petrochemistry, chemistry, gas, or the like. The sensor device is a pressure sensor, a temperature sensor, a flow sensor, a pH sensor, a velocity sensor, an acceleration sensor, or the like. The operation device is a valve, a pump, a fan, or the like, and driven by a motor, an actuator, or the like.

Meanwhile, the field devices 53a-1 and 53a-2 are the same field devices. The field devices 53c-1 and 53c-2 are the same field devices. In the following descriptions, the field devices 53a-1 and 53a-2 may collectively be referred to as a field device 53a as appropriate. The field devices 53c-1 and 53c-2 may collectively be referred to as a field device 53c as appropriate.

For example, the same field devices indicate that all of the field devices have the same hardware configurations, the same software configurations, the same performance, and the same functions.

It is assumed that the field device 53a is a field device of a "device type A". It is assumed that the field device 53b is a field device of a "device type B". It is assumed that the field device 53c is a field device of a "device type C".

When the hosts 51a and 51b and the field device 53c that are connected to the first link L1 communicate with one another, the first link L1 is used. In contrast, when the hosts 51a and 51b and the field device 53c that are connected to the first link L1 communicate with the field devices 53a and 53b that are connected to the second link L2, communication is performed via the relay apparatus 100.

In the following descriptions, the hosts 51a and 51b and the field device 53c that are connected to the first link L1 may appropriately be described as each of the devices that are connected to the first link L1. The field devices 53a and 53b that are connected to the second link L2 may appropriately be described as each of the devices that are connected to the second link L2.

In the first embodiment, the devices that use the first link L1 communicate with one another at a certain communication speed and by a certain communication protocol that are based on the PROFIBUS-DP or the like. The devices that are connected to the second link L2 communicate with one another at a certain communication speed and by a certain communication protocol that are based on the PROFIBUS-PA or the like.

The relay apparatus 100 is an apparatus that converts communication between the first link L1 and the second link L2. The relay apparatus 100 is an I/O device or the like.

A process in which the host that is connected to the first link L1 in the system 50 updates, via the relay apparatus 100, software of the same field devices that are connected to the second link L2 will be described below. As one example, a case will be descried in which the host 51a updates software of the field device 53a.

The host 51a transmits "software of the device type A" to the relay apparatus 100, and the relay apparatus 100 stores the software of the device type A in a storage unit. The relay apparatus 100 exchanges a command with the field device 53a-1, and transmits the software of the device type A to the field device 53a-1 to update software of the field device 53a-1. Subsequently, the relay apparatus 100 exchanges a command with the field device 53a-2 and transmits the software of the device type A to the field device 53a-2 to update software of the field device 53a-2.

With this configuration, while the field device 13a is receiving the download target software, it is possible to prevent the communication band of the first link from being occupied, so that it is possible to reduce the communication amount of the entire system.

### Functional configuration of relay apparatus of first embodiment

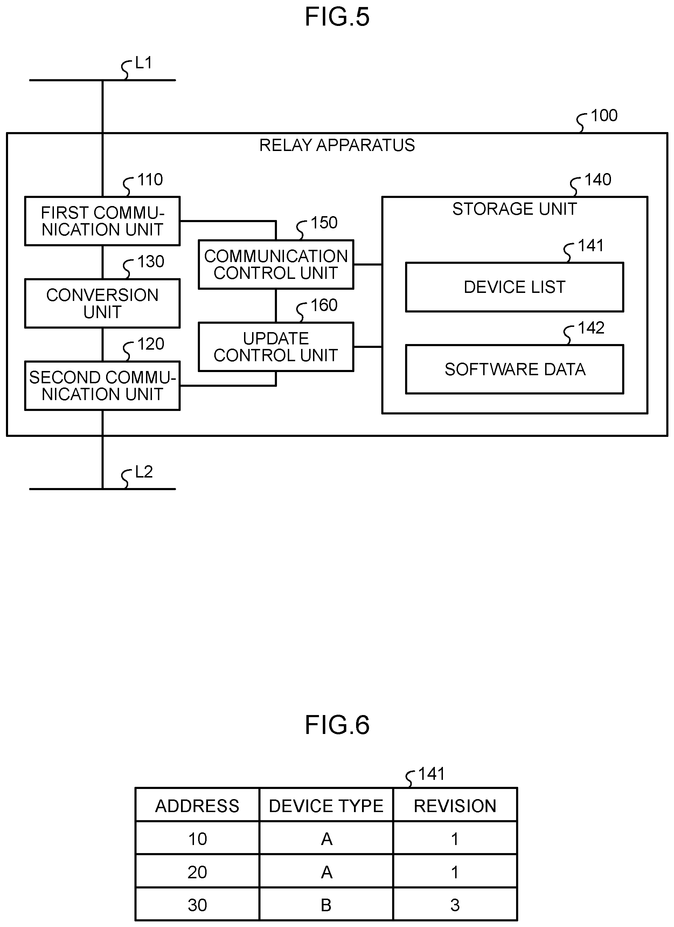

A configuration example of the relay apparatus 100 illustrated in FIG. 4 will be described below. FIG. 5 is a functional block diagram illustrating a functional configuration of the relay apparatus according to the first embodiment. As illustrated in FIG. 5, the relay apparatus 100 includes a first communication unit 110, a second communication unit 120, a conversion unit 130, a storage unit 140, a communication control unit 150, and an update control unit 160.

The first communication unit 110 communicates with each of the devices that are connected to the first link L1 at a certain communication speed and by a certain communication protocol that are based on the PROFIBUS-DP or the like. When receiving data that is addressed to each of the devices of the second link L2, the first communication unit 110 outputs the received data to the conversion unit 130. For example, the devices of the second link L2 include the field devices 53a and 53b.

The second communication unit 120 communicates with each of the devices that are connected to the second link L2 at a certain communication speed and by a certain communication protocol that are based on the PROFIBUS-PA or the like. When receiving data that is addressed to each of the devices of the first link L1, the second communication unit 120 outputs the received data to the conversion unit 130. For example, the devices of the first link L1 include the field device 53c.

The conversion unit 130 converts communication between the first link L1 and the second link L2. For example, when receiving data from the first communication unit 110, the conversion unit 130 converts a communication speed and a communication protocol of the data to a communication speed and a communication protocol of the second link L2, and outputs the data to the second communication unit 120. In contrast, when receiving data from the second communication unit 120, the conversion unit 130 converts a communication speed and a communication protocol of the data to a communication speed and a communication protocol of the first link L1, and outputs the data to the first communication unit 110.

The storage unit 140 includes a device list 141 and software data 142. The storage unit 140 is a memory or the like.

The device list 141 includes information on each of the devices that are connected to the second link L2. FIG. 6 is a diagram illustrating an example of a data structure of the device list. As illustrated in FIG. 6, the device list 141 includes an address and a revision.

The address is an Internet Protocol (IP) address or the like of the field device. A device type is a device type of the field device. A field device of the same device type is the same field device. The revision indicates a version of software that is set in a corresponding field device.

In the first embodiment, it is assumed that an address of the field device 53a-1 is set to "10". It is assumed that an address of the field device 53a-2 is set to "20". It is assumed that an address of the field device 53b is set to "30".

The software data 142 is data of download target software that is transmitted from the host 51a. For example, the software data 142 is data of the software of the device type A. It may be possible to add, to the software data 142, a device type or data on a revision of the software.

Meanwhile, the relay apparatus 100 is able to store therein the plurality of device lists 141 and the pieces of software data 142 for a plurality of devices as long as the capacity of the storage unit 140 allows. For example, the relay apparatus 100 is able to store, as the software data 142, data of software of the device type A, data of software of the device type B, and data of software of a different device type in the storage unit 140.

The communication control unit 150 has a function to communicate with the host 51a that is connected to the first link L1, and performs communication by, for example, a certain communication protocol, such as a Transmission Control Protocol/Internet Protocol (TCP/IP) or a HyperText Transfer Protocol (HTTP).

For example, when the host 51a transmits the software of the device type A to the relay apparatus 100, the communication control unit 150 receives the software of the device type A via the first communication unit 110 and stores the software of the device type A as the software data 142 in the storage unit 140. When reception of the software of the device type A is completed, the communication control unit 150 instructs the update control unit 160 to perform a download process on the device (the field device 53a) of the second link L2.

When receiving an instruction on a download process from the communication control unit 150, the update control unit 160 identifies a field device that is adopted as a software download target based on a device type of the software data 142 and the device list 141. For example, when the device type of the software data 142 is the "device type A", the update control unit 160 identifies the field devices 53a-1 and 53a-2 as software download targets.

An example of a process that is performed by the update control unit 160 after the field devices 53a-1 and 53a-2 are identified as the software download targets will be described below. The update control unit 160 performs processes at the first step, the second step, and the third step on the field device 53a-1, and thereafter performs processes at a first step, a second step, and a third step to be described later on the field device 53a-2.

The first step that is performed by the update control unit 160 will be described. The update control unit 160 transmits a command indicating a Download start instruction to the field device 53a-1. In the following descriptions, the command indicating the Download start instruction will be described as a "Download start instruction command". When receiving the command, the field device 53a-1 performs a Download preparation. When the field device 53a-1 completes preparation for Download, the update control unit 160 goes to the second step.

The second step that is performed by the update control unit 160 will be described. The update control unit 160 transmits download target software to the field device 53a-1. The download target software has a large size and is not transmittable at once, and therefore, the update control unit 160 divides the download target software into a plurality of communication frames and transmits the communication frames to the field device 53a-1. When transmission of the download target software is completed, the update control unit 160 goes to the third step.

The third step that is performed by the update control unit 160 will be described. The update control unit 160 transmits a command indicating a change of the software to the field device 53a-1. In the following descriptions, the command indicating a change of the software will be described as a "software change command". When receiving the command, the field device 53a-1 updates software of the field device 53a-1 with the new software that is received at the second step and performs activation. From this time point, the field device 53a-1 operates with the new software. The update control unit 160 updates a revision corresponding to the field device 53a-1 (address 10) in the device list 141 with an updated revision.

Thus, the processes at the first step, the second step, and the third step that are performed by the update control unit 160 on the field device 53a-1 have been described. Processes at the first step, the second step, and the third step that are performed by the update control unit 160 on the field device 53a-2 after the above-described process are the same as the above-described processes except that a processing target is changed from the field device 53a-1 to the field device 53a-2, and therefore, explanation thereof will be omitted.

### Flow of software download process of first embodiment

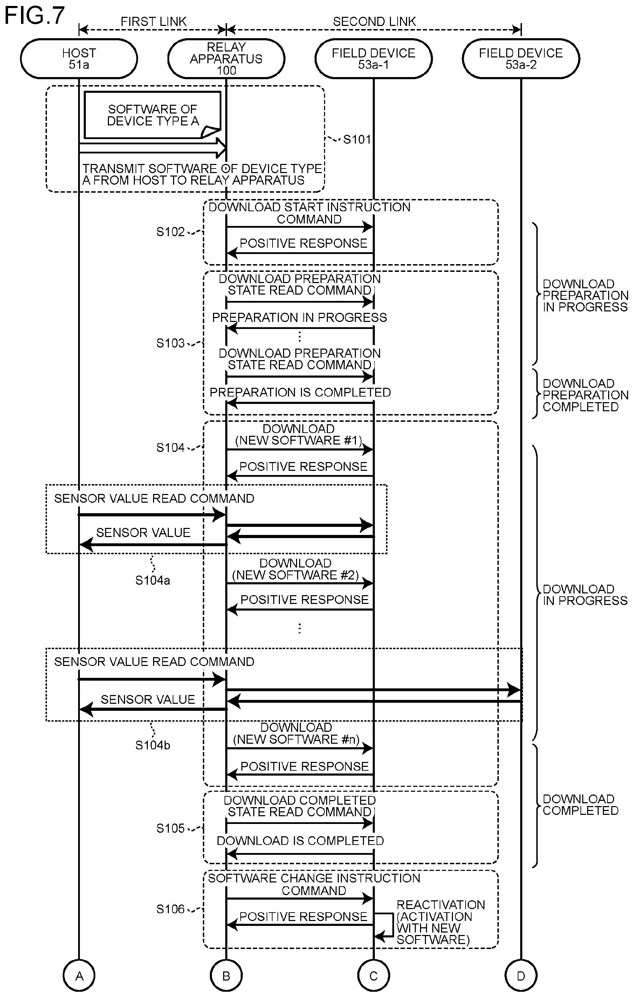

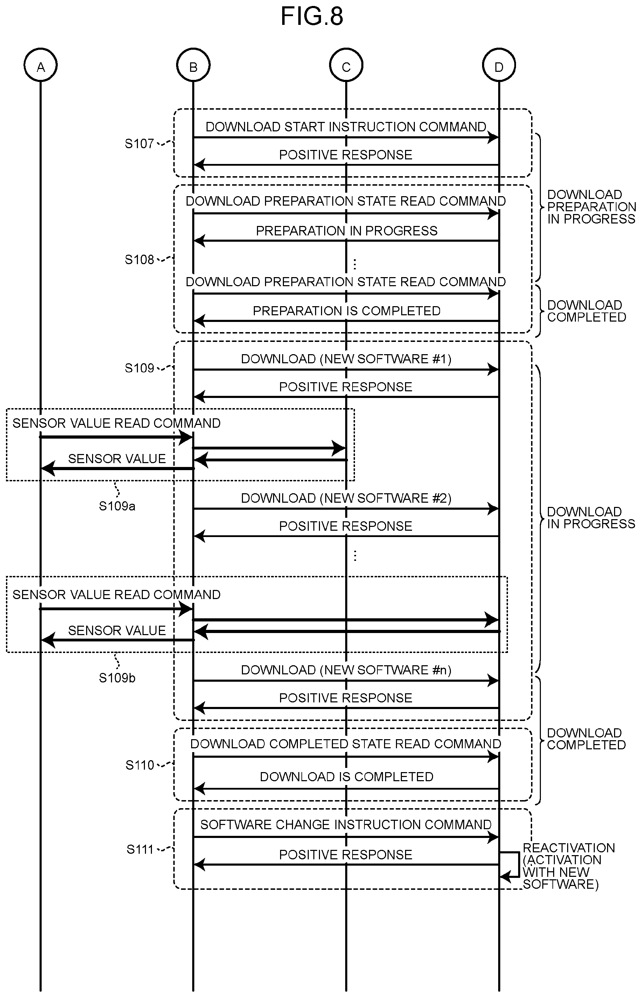

A flow of the software download process of the first embodiment will be described below. FIG. 7 and FIG. 8 are flowcharts illustrating the software download process of the first embodiment. In the example illustrated in FIG. 7 and FIG. 8, the flow of a process in a case where the host 51a transmits the "software of the device type A", which is to be downloaded, to the relay apparatus 100 will be described. Meanwhile, the "Download preparation state Read command" illustrated in FIG. 7 and FIG. 8 indicates a command for inquiring of the field device about a state of a Download preparation state. The "sensor value Read command" indicates a command for inquiring of the field device about a sensor value. The "Download completed state Read command" indicates a command for inquiring of the field device about a Download completed state. Further, Download (new software #1) to Download (new software #n) indicate states in which divided pieces of download data are transmitted to the field device.

Explanation will be given below with reference to FIG. 7. The host 51a transmits the software of the device type A to the relay apparatus 100, and the relay apparatus 100 stores the software of the device type A in the storage unit 140 (Step S101).

The relay apparatus 100 transmits the Download start instruction command to the field device 53a-1. When receiving the Download start instruction command, the field device 53a-1 transmits a positive response to the relay apparatus 100 and performs a Download preparation (Step S102).

The relay apparatus 100 repeats the process of transmitting the Download preparation state Read command to the field device 53a-1 until the field device 53a-1 completes the Download preparation. When the Download preparation is completed, the field device 53a-1 transmits a positive response about preparation completion to the relay apparatus 100 (Step S103).

When receiving the preparation completion from the field device 53a-1, the relay apparatus 100 divides the download target software (new software #1 to new software #n) and transmits the divided pieces of software to the field device 53a-1. The field device 53a-1 transmits a positive response to the relay apparatus 100 every time the field device 53a-1 receives the divided piece of software. The relay apparatus 100 and the field device 53a-1 repeat the process as described above until transmission of the entire download target software is completed. When reception of the entire download target software is completed, the field device 53a-1 enters the Download completed state (Step S104).

When transmission of the entire download target software is completed, the relay apparatus 100 transmits the Download completed state Read command to the field device 53a-1. When receiving the Download completed state Read command, the field device 53a-1 transmits Download completion to the relay apparatus 100 (Step S105).

The relay apparatus 100 transmits the software change instruction command to the field device 53a-1. When receiving the software change instruction command, the field device 53a-1 updates software of the field device 53a-1 with the new software and performs reactivation (Step S106).

Meanwhile, the host 51a performs a process of periodically acquiring sensor values from the field devices 53a-1 and 53a-2 via the relay apparatus 100 while performing the process at Step S104. For example, the host 51a transmits the sensor value Read command to the field device 53a-1, and the field device 53a-1 transmits a sensor value to the host 51a (Step S104a). The host 51a transmits the sensor value Read command to the field device 53a-2, and the field device 53a-2 transmits a sensor value to the host 51a (Step S104b).

Explanation will be given below with reference to FIG. 8. The relay apparatus 100 transmits the Download start instruction command to the field device 53a-2. When receiving the Download start instruction command, the field device 53a-2 transmits a positive response to the relay apparatus 100 and performs a Download preparation (Step S107).

The relay apparatus 100 repeats the process of transmitting the Download preparation state Read command to the field device 53a-2 until the field device 53a-2 completes the Download preparation. When the Download preparation is completed, the field device 53a-2 transmits a positive response about preparation completion to the relay apparatus 100 (Step S108).

When receiving the preparation completion from the field device 53a-2, the relay apparatus 100 divides the download target software (new software #1 to new software #n) and transmits the divided pieces of software to the field device 53a-2. The field device 53a-2 transmits a positive response to the relay apparatus 100 every time the field device 53a-2 receives the divided piece of software. The relay apparatus 100 and the field device 53a-2 repeat the process as described above until transmission of the entire download target software is completed. When reception of the entire download target software is completed, the field device 53a-2 enters the Download completed state (Step S109).

When transmission of the entire download target software is completed, the relay apparatus 100 transmits the Download completed state Read command to the field device 53a-2. When receiving the Download completed state Read command, the field device 53a-2 transmits Download completion to the relay apparatus 100 (Step S110).

The relay apparatus 100 transmits the software change instruction command to the field device 53a-2. When receiving the software change instruction command, the field device 53a-2 updates software of the field device 53a-2 with the new software and performs reactivation (Step S111).

Meanwhile, the host 51a performs a process of periodically acquiring sensor values from the field devices 53a-1 and 53a-2 via the relay apparatus 100 while performing the process at Step S109. For example, the host 51a transmits the sensor value Read command to the field device 53a-1, and the field device 53a-1 transmits a sensor value to the host 51a (Step S109a). The host 51a transmits the sensor value Read command to the field device 53a-2, and the field device 53a-2 transmits a sensor value to the host 51a (Step S109b).

### Effects of first embodiment

Effects of the relay apparatus 100 according to the first embodiment will be described below. The relay apparatus 100 receives, from a host of the first link L1, software for which an apparatus that is connected to the second link L2 is adopted as a transmission destination, and stores the received software in the storage unit 140. The relay apparatus 100 transmits the software that is stored in the storage unit 140 to the apparatus that is connected to the second link L2 to update the apparatus that is connected to the second link L2. With this configuration, it is possible to prevent the communication band of the first link L1 from being occupied while the apparatus (field device) that is connected to the second link L2 is receiving download target software, so that it is possible to reduce a communication amount of the entire system.

It is possible to prevent the communication band of the first link L1 from being occupied while the apparatus (field device) that is connected to the second link L2 is receiving the download target software, so that it is possible to reduce a time in which the control loop of the first link L1 is stopped.

It is possible to reduce loads on the hosts 51 and 52 of the first link L1 by which the software is transmitted, so that it is possible to reduce a downtime of the entire system.

### Second embodiment

### Explanation of system of second embodiment

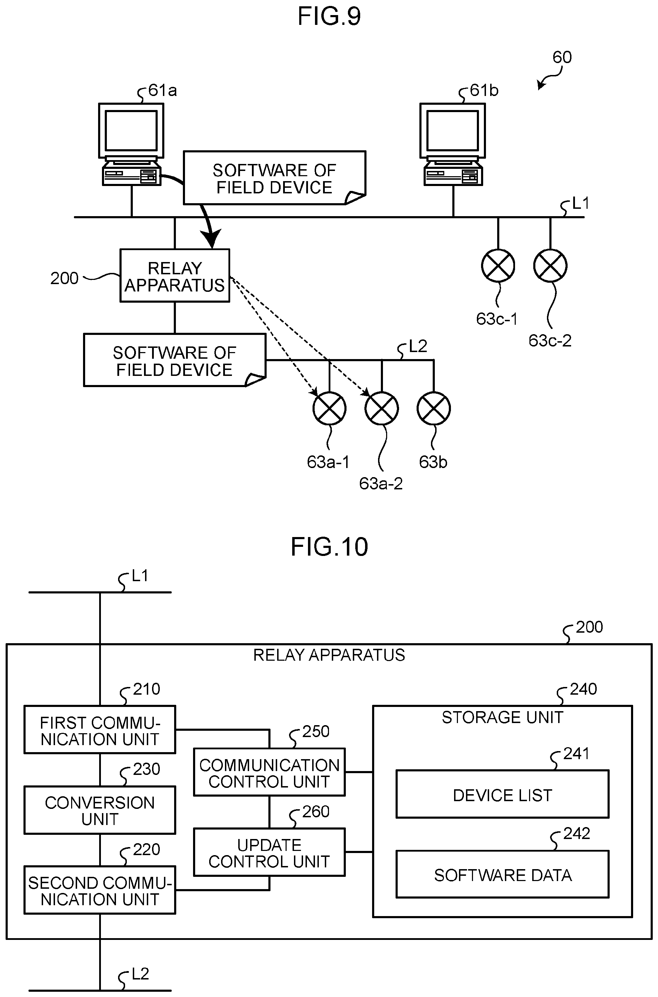

An example of a system of a second embodiment will be described below. FIG. 9 is a diagram illustrating the system of the second embodiment. As illustrated in FIG. 9, a system 60 of the second embodiment includes hosts 61a and 61b, a relay apparatus 200, and field devices 63a-1, 63a-2, 63b, 63c-1, and 63c-2. The hosts 61a and 61b, the relay apparatus 200, and the field devices 63c-1 and 63c-2 are connected to the first link L1. The relay apparatus 200, the field devices 63a-1, 63a-2, and 63b are connected to the second link L2.

The hosts 61a and 61b are PCs that are used by a worker, acquire sensor values from the field devices 63a-1, 63a-2, 63b, 63c-1, and 63c-2, and updates software. The field devices 63a-1, 63a-2, 63b, 63c-1, and 63c-2 are sensors or the like.

Meanwhile, the field devices 63a-1 and 63a-2 are the same field devices. The field devices 63c-1 and 63c-2 are the same field devices. In the following descriptions, the field devices 63a-1 and 63a-2 may collectively be referred to as a field device 63a as appropriate. The field devices 63c-1 and 63c-2 may collectively be referred to as a field device 63c as appropriate.

It is assumed that the field device 63a is a field device of the "device type A". It is assumed that the field device 63b is a field device of the "device type B". It is assumed that the field device 63c is a field device of the "device type C".

When the hosts 61a and 61b and the field device 63c that are connected to the first link L1 communicate with one another, the first link L1 is used. In contrast, when the hosts 61a and 61b and the field device 63c that are connected to the first link L1 communicate with the field devices 63a and 63b that are connected to the second link L2, communication is performed via the relay apparatus 200.

In the following descriptions, the hosts 61a and 61b and the field device 63c that are connected to the first link L1 may appropriately be described as each of the devices that are connected to the first link L1. The field devices 63a and 63b that are connected to the second link L2 may appropriately be described as each of the devices that are connected to the second link L2.

Similarly to the first embodiment, in the second embodiment, the devices that use the first link L1 communicate with one another at a certain communication speed and by a certain communication protocol that are based on the PROFIBUS-DP or the like. The devices that are connected to the second link L2 communicate with one another at a certain communication speed and by a certain communication protocol that are based on the PROFIBUS-PA or the like.

The relay apparatus 200 is an apparatus that converts communication between the first link L1 and the second link L2. The relay apparatus 200 is an I/O device or the like.

A process in which the host that is connected to the first link L1 in the system 60 updates, via the relay apparatus 200, software of the same field devices that are connected to the second link L2 will be described below. As one example, a case will be descried in which the host 61a updates software of the field device 63a.

The host 61a transmits the "software of the device type A" to the field device 53a-1 via the relay apparatus 200, and the host 61a exchanges a command with the field device 53a-1 to update the software of the field device 53a-1. The relay apparatus 200, while relaying the "software of the device type A", performs a process of storing the "software of the device type A" in a storage unit.

After update of the field device 53a-1 is completed, the relay apparatus 100 exchanges a command with the field device 53a-2, and transmits the software of the device type A that is stored in the storage unit to the field device 53a-2 to update the software of the field device 53a-2.

In the second embodiment, a process of transmitting the "software of the device type A" from the host 61a to only the relay apparatus 200 is omitted; therefore, as compared to the first embodiment, it is possible to reduce a time that is needed for software download in the entire system. Furthermore, the relay apparatus 200 updates the software by transmitting the software that is stored in the storage unit to the remaining field device; therefore, it is possible to prevent the communication band of the first link from being occupied and it is possible to reduce the communication amount of the entire system.

### Functional configuration of relay apparatus of second embodiment

A configuration example of the relay apparatus 200 illustrated in FIG. 9 will be described below. FIG. 10 is a functional block diagram illustrating a functional configuration of the relay apparatus according to the second embodiment. As illustrated in FIG. 10, the relay apparatus 200 includes a first communication unit 210, a second communication unit 220, a conversion unit 230, a storage unit 240, a communication control unit 250, and an update control unit 260.

The first communication unit 210 communicates with each of devices that are connected to the first link L1 at a certain communication speed and by a certain communication protocol that are based on the PROFIBUS-DP or the like. When receiving data that is addressed to each of the devices (any of the devices) of the second link L2, the first communication unit 210 outputs the received data to the conversion unit 230.

The second communication unit 220 communicates with each of devices that are connected to the second link L2 at a certain communication speed and by a certain communication protocol that are based on the PROFIBUS-PA or the like. When receiving data that is addressed to each of the devices (any of the devices) of the first link L1, the second communication unit 220 outputs the received data to the conversion unit 230.

The conversion unit 230 converts communication between the first link L1 and the second link L2. For example, when receiving data from the first communication unit 210, the conversion unit 230 converts a communication speed and a communication protocol of the data to a communication speed and a communication protocol of the second link L2, and outputs the data to the second communication unit 220. In contrast, when receiving data from the second communication unit 120, the conversion unit 230 converts a communication speed and a communication protocol of the data to a communication speed and a communication protocol of the first link L1, and outputs the data to the first communication unit 210.

The storage unit 240 includes a device list 241 and software data 242. The storage unit 240 is a memory or the like.

The device list 241 includes information on each of the devices that are connected to the second link L2. Other explanation on the device list 241 is the same as the explanation on the device list 141 as illustrated in FIG. 6. Meanwhile, in the second embodiment, it is assumed that an address of the field device 63a-1 is set to "10". It is assumed that an address of the field device 63a-2 is set to "20". It is assumed that an address of the field device 63b is set to "30".

The software data 242 is data of download target software that is transmitted from the host 61a. Other explanation on the software data 242 is the same as the explanation on the software data 142 as illustrated in FIG. 5.

The communication control unit 250 has a function to communicate with the host 61a that is connected to the first link L1, and performs communication by, for example, a certain communication protocol, such as a TCP/IP or an HTTP.

For example, when the host 61a transmits the software of the device type A to the field device 63a-1 via the relay apparatus 200, the communication control unit 250 receives the software of the device type A via the first communication unit 210 and stores the software of the device type A as the software data 242 in the storage unit 240.

When reception of the software of the device type A is completed, the communication control unit 250 instructs the update control unit 260 to perform a download process on the device (the field device 53a-2) of the second link L2. Furthermore, the communication control unit 250 monitors data exchange between the host 61a and the field device 63a-1, and when download completion of the field device 63a-1 is identified, a notice of the download completion of the field device 63a-1 is given to the update control unit 260.

When receiving an instruction on a download process from the communication control unit 250, the update control unit 260 identifies a field device that is adopted as a software download target based on a device type of the software data 242 and the device list 241. For example, when the device type of the software data 242 is the "device type A" and download for the field device 63a-1 is completed, the update control unit 260 identifies the field device 63a-2 as a software download target.

A software download process related to the system 60 will be described below. Here, a case will be descried in which the host 61a transmits software to the field device 63a-1, and thereafter the relay apparatus 200 transmits software to the field device 63a-2. For example, in the software download process of the second embodiment, processes are performed at a first step, a second step, a third step, a fourth step, a fifth step, and a sixth step in this order.

The first step of the system 60 will be described. The host 61a transmits the Download start instruction command to the field device 63a-1. When receiving the command, the field device 63a-1 performs a Download preparation. When the field device 63a-1 completes preparation for Download, the host 61a goes to the second step.

The second step of the system 60 will be described. The host 61a transmits the download target software to the field device 63a-1. The download target software has a large size and is not transmittable at once, and therefore, the host 61a divides the download target software into a plurality of communication frames and transmits the communication frames to the field device 63a-1. The communication control unit 250 of the relay apparatus 200 stores, in the storage unit 240, the download target software that is transmitted from the host 61a to the field device 63a-1. When transmission of the download target software is completed, the host 61a goes to the third step.

The third step of the system 60 will be described. The host 61a transmits the software change command to the field device 63a-1. When receiving the command, the field device 63a-1 updates software of the field device 63a-1 with the new software that is received at the second step and performs activation. From this time point, the field device 63a operates with the new software. Meanwhile, the communication control unit 250 updates a revision corresponding to the field device 63a-1 (address 10) in the device list 241 with an updated revision.

The fourth step of the system 60 will be described. The update control unit 260 of the relay apparatus 200 transmits the Download start instruction command to the field device 63a-2. When receiving the command, the field device 53a-2 performs a Download preparation. When the field device 63a-1 completes preparation for Download, the update control unit 260 goes to the fifth step.

The fifth step of the system 60 will be described. The update control unit 260 transmits the download target software to the field device 63a-2. The download target software has a large size and is not transmittable at once, and therefore, the update control unit 260 divides the download target software into a plurality of communication frames and transmits the communication frames to the field device 63a-2. When transmission of the download target software is completed, the update control unit 260 goes to the sixth step.

The sixth step of the system 60 will be described. The update control unit 260 transmits the software change command to the field device 63a-2. When receiving the command, the field device 63a-2 updates software of the field device 63a-2 with the new software that is received at the fifth step and performs activation. From this time point, the field device 53a-2 operates with the new software. The update processing unit 260 updates a revision corresponding to the field device 63a-2 (address 20) in the device list 241 with an updated revision.

### Flow of software download process of second embodiment

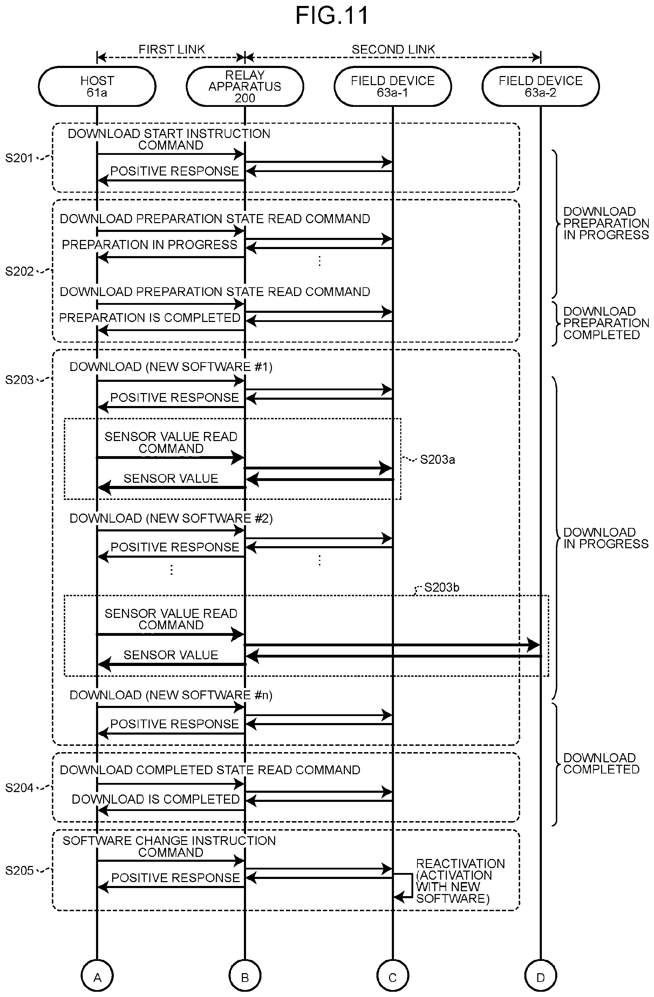

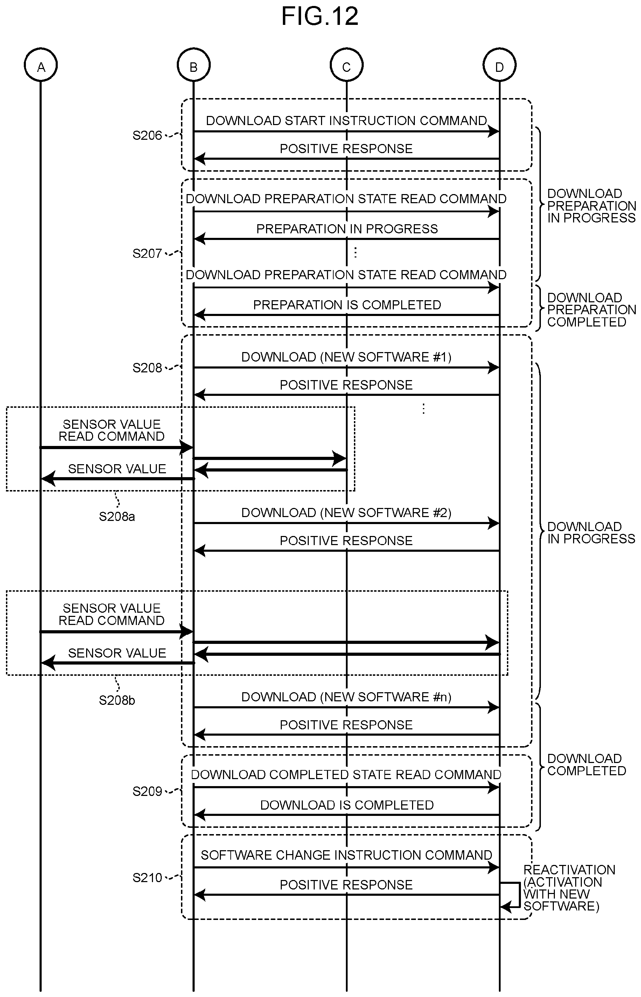

A flow of the software download process of the second embodiment will be described below. FIG. 11 and FIG. 12 are flowcharts illustrating the software download process of the second embodiment. In the example illustrated in FIG. 11 and FIG. 12, a case will be described in which the host 61a transmits software to the field device 63a-1, and thereafter the relay apparatus 200 transmits software to the field device 63a-2. Explanation of each of commands illustrated in FIG. 11 and FIG. 12 is the same as the explanation of each of the commands illustrated in FIG. 7 and FIG. 8.

Explanation will be given below with reference to FIG. 11. The host 61a transmits the Download start instruction command to the field device 63a-1 via the relay apparatus 200. When receiving the Download start instruction command, the field device 63a-1 transmits a positive response to the host 11a via the relay apparatus 200 and performs a Download preparation (Step S201).

The host 61a repeats the process of transmitting the Download preparation state Read command to the field device 63a-1 via the relay apparatus 200 until the field device 63a-1 completes the Download preparation. When the Download preparation is completed, the field device 63a-1 transmits a positive response about preparation completion to the host 61a via the relay apparatus 200 (Step S202).

When receiving the preparation completion from the field device 63a-1, the host 61a divides the download target software and transmits the divided pieces of software to the field device 63a-1. The field device 63a-1 transmits a positive response to the host 61a every time the field device 63a-1 receives the divided piece of software. The host 61a and the field device 63a-1 repeat the process as described above until transmission of the entire download target software is completed. When reception of the entire download target software is completed, the field device 63a-1 enters a Download completed state. The relay apparatus 200 stores, in the storage unit 240, the download target software that is transmitted from the host 61a to the field device 63a-1 (Step S203).

When transmission of the entire download target software is completed, the host 61a transmits the Download completed state Read command to the field device 63a-1. When receiving the Download completed state Read command, the field device 63a-1 transmits Download completion to the host 61a (Step S204).

The host 61a transmits the software change instruction command to the field device 63a-1. When receiving the software change instruction command, the field device 63a-1 updates software of the field device 63a-1 with the new software and performs reactivation (Step S205).

Meanwhile, the host 61a performs a process of periodically acquiring sensor values from the field devices 63a-1 and 63a-2 while performing the process at Step S203. For example, the host 61a transmits the sensor value Read command to the field device 63a-1, and the field device 63a-1 transmits a sensor value to the host 61a (Step S203a). The host 61a transmits the sensor value Read command to the field device 63a-2, and the field device 63a-2 transmits a sensor value to the host 61a (Step S203b).

Explanation will be given below with reference to FIG. 12. The relay apparatus 100 transmits the Download start instruction command to the field device 63a-2. When receiving the Download start instruction command, the field device 63a-2 transmits a positive response to the relay apparatus 200 and performs a Download preparation (Step S206).

The relay apparatus 200 repeats the process of transmitting the Download preparation state Read command to the field device 63a-2 until the field device 63a-2 completes the Download preparation. When the Download preparation is completed, the field device 63a-2 transmits a positive response about preparation completion to the relay apparatus 200 (Step S207).

When receiving the preparation completion from the field device 63a-2, the relay apparatus 200 divides the download target software (new software #1 to new software #n) and transmits the divided pieces of software to the field device 63a-2. The field device 63a-2 transmits a positive response to the relay apparatus 200 every time the field device 63a-2 receives the divided piece of software. The relay apparatus 200 and the field device 63a-2 repeat the process as described above until transmission of the entire download target software is completed. When reception of the entire download target software is completed, the field device 63a-2 enters the Download completed state (Step S208).

When transmission of the entire download target software is completed, the relay apparatus 200 transmits the Download completed state Read command to the field device 63a-2. When receiving the Download completed state Read command, the field device 53a-2 transmits Download completion to the relay apparatus 100 (Step S209).

The relay apparatus 200 transmits the software change instruction command to the field device 63a-2. When receiving the software change instruction command, the field device 63a-2 updates software of the field device 63a-2 with the new software and performs reactivation (Step S210).

Meanwhile, the host 61a performs a process of periodically acquiring sensor values from the field devices 63a-1 and 63a-2 via the relay apparatus 200 while performing the process at Step S208. For example, the host 61a transmits the sensor value Read command to the field device 63a-1, and the field device 63a-1 transmits a sensor value to the host 61a (Step S208a). The host 61a transmits the sensor value Read command to the field device 63a-2, and the field device 63a-2 transmits a sensor value to the host 61a (Step S208b).

### Effects of second embodiment

Effects of the relay apparatus 200 according to the second embodiment will be described below. For example, the relay apparatus 200 stores the "software of the device type A" in the storage unit 240 while the host 61a that is connected to the first link L1 transmits the "software of the device type A" to the field device 63a-1 that is connected to the second link L2 to perform update. The relay apparatus 200 performs update by transmitting the "software of the device type A" that is stored in the storage unit 240 to the field device 63a-2 that is connected to the second link L2.

In the second embodiment, the process of transmitting the "software of the device type A" from the host 61a to only the relay apparatus 200 is omitted, so that it is possible to reduce a time of the entire system that is needed for software download as compared to the first embodiment. Further, the relay apparatus 200 updates software by transmitting the software that is stored in the storage unit to the other field devices, so that it is possible to prevent the communication band of the first link L1 from being occupied and reduce a communication amount of the entire system.

Thus, the first embodiment and the second embodiment have been described above, but the processes of the system according to the present invention are not limited the processes described in the first embodiment and the second embodiment. Other embodiments will be described below.

### Other embodiments

For example, it may be possible to prepare a different interface in the relay apparatus, store "software of a specific device type" to be downloaded from a storage device, such as a device of a third link L3 or a Universal Serial Bus (USB) memory or the like, and update a field device that is connected to the second link.

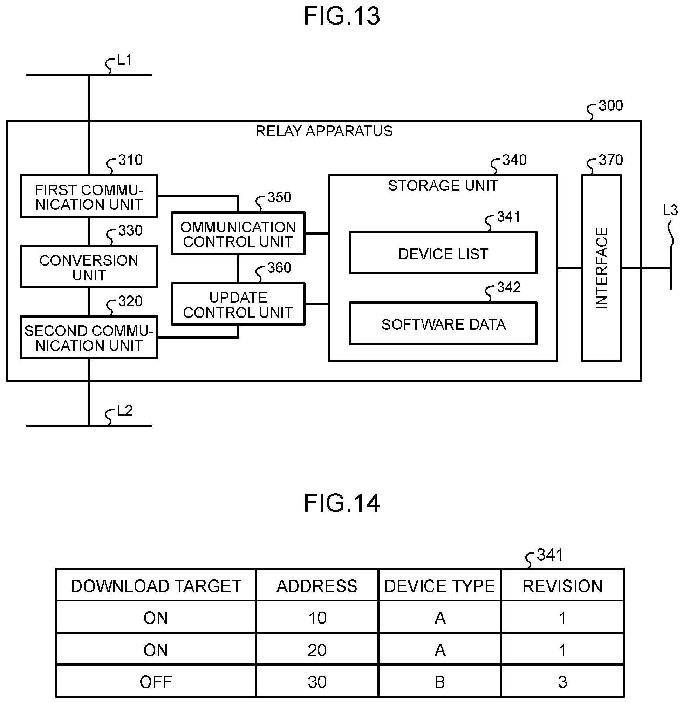

FIG. 13 is a functional block diagram illustrating a configuration of a relay apparatus according to a different embodiment. As illustrated in FIG. 13, a relay apparatus 300 includes a first communication unit 310, a second communication unit 320, a conversion unit 330, a storage unit 340, a communication control unit 350, an update control unit 360, and an interface 370.

In explanation of the relay apparatus 300, it is assumed that devices that are connected to the first link L1 of the system of the different embodiment are the hosts 51a and 51b and the field device 53c that are illustrated in FIG. 4. It is assumed that the devices that are connected to the second link L2 are the field devices 53a and 53b that illustrated in FIG. 4.

Explanation on the first communication unit 310, the conversion unit 330, the second communication unit 320 is the same as the explanation on the first communication units 110 and 210, the conversion units 130 and 230, and the second communication units 120 and 220.

The storage unit 340 includes a device list 341 and a software data 342. The storage unit 340 is a memory or the like.

The device list 341 includes information on each of the devices that are connected to the second link L2. The device list 341 may be the device list 141 as illustrated in FIG. 6, or may be a device list as illustrated in FIG. 14.

FIG. 14 is a diagram illustrating an example of a data structure of the device list according to the different embodiment. As illustrated in FIG. 14, the device list 341 includes a download target, an address, and a revision. The download target indicates whether or not a device is a software download target. "ON" is set when the device is the download target, and "OFF" is set when the device is not the download target. "ON" and "OFF" of the download target in the device list 341 may be set by a device that is connected to the third link L3 by accessing the relay apparatus 300, or may be directly set by a user by operating an input unit of the relay apparatus 300.

Explanation on the address and the revision in the device list 341 is the same as the explanation on the address and the revision in the device list 141.

The software data 342 may be data of download target software that is transmitted from the host 51a, or may be data of download target software that is transmitted from a device of the third link L3 or a storage device, such as a USB memory, via the interface 370.

The communication control unit 350 has a function to communicate with the host 51a that is connected to the first link L1, and performs communication by, for example, a communication protocol, such as a TCP/IP or an HTTP. Meanwhile, the communication control unit 350 may communicate with a device of the third link L3 to set ON or OFF of the download target in the device list 341 or receive data related to presence or absence of software transmission completion. When receiving the software transmission completion from a device of the third link L3, the communication control unit 350 instructs the update control unit 360 to perform a download process on a device (for example, the field device 53a) of the second link L2.

Other explanation on the communication control unit 350 is the same as the explanation on the communication control units 150 and 250.

When receiving an instruction on the download process from the communication control unit 350, the update control unit 360 identifies a field device that is adopted as a software download target based on the device type of the software data 342 and the device list 341. For example, as illustrated in FIG. 14, when download targets with the address "10" and the address "20" are set to "ON", the update control unit 360 identifies the field devices 53a-1 and 53a-2 as software download targets.

Other explanation on the update control unit 360 is the same as the explanation on the update control units 160 and 260.

The interface 370 is connected to a device (host or the like) of the third link L3 or a storage device, such as a USB memory, and stores, in the storage unit 340, "the software of the specific device type" to be downloaded.

As described above, the different interface 370 is prepared in the relay apparatus 300, "the software of the specific device type" to be downloaded is stored from a device of the third link L3 or a storage device, such as a USB memory, and the field device that is connected to the second link is updated. With this configuration, it is possible to download software without increasing loads on the host and the first link L1.

Furthermore, when the technology is applied to a system that includes a plurality of relay apparatuses, the interface 370 may be connected to the different relay apparatus. For example, by connecting the relay apparatuses by the third link L3, it is possible to device software that is to be downloaded and that is stored in the storage unit 340, and effectively download software in the entire system.

In the relay apparatus 300, information indicating whether or not a device is a software download target is set in the device list 341. With this configuration, it is possible to perform configuration such that software download is performed on a specific field device or revisions of all of devices of the second link L2 are unified.

### Hardware

A hardware configuration example of the relay apparatus 100 (200 and 300) will be described below. FIG. 15 is a diagram for explaining a hardware configuration example. As illustrated in FIG. 15, the relay apparatus 100 includes a communication apparatus 6a, a Hard Disk Dive (HDD) 6b, a memory 6c, and a processor 6d. Further, all of the units illustrated in FIG. 15 are connected to one another via a bus or the like.

The communication apparatus 6a is a network the interface card or the like, and communicates with a different server. The HDD 6b stores there in a program or a DB for implementing the functions illustrated in FIG. 5 for example.

The processor 6d reads a program for performing the same processes as those of each of the processing units illustrated in, for example, FIG. 5 from the HDD 6b or the like, loads the program onto the memory 6c, and executes processes for implementing each of the functions described with reference to FIG. 5 etc. For example, the process implements the same functions as those of each of the processing units included in the relay apparatus 100. Specifically, the processor 6d executes a process for implementing the same processes as those of the first communication unit 110, the second communication unit 120, the conversion unit 130, the communication control unit 150, the update control unit 160, and the like.

In this manner, the relay apparatus 100 operates as a relay apparatus that reads and executes a program to implement a relay method. Further, the relay apparatus 100 is able to implement the same functions as those of the embodiments as described above by reading causing a medium reader to read the above-described program from a recording medium and executing the above-described read program. Meanwhile, the program described in the different embodiment need not always be executed by the relay apparatus 100. For example, the present invention may be applied in the same manner when a different computer or a different server executes a program or a different computer and a different server execute the program in a cooperative manner.

The program may be distributed via a network, such as the Internet. Further, the program may be recorded in a computer readable recording medium, such as a hard disk, a flexible disk (FD), a compact disc read only memory (CD-ROM), a Magneto-Optical disk (MO), or a Digital Versatile Disc (DVD), and may be executed by being rea from the recording medium by the computer.

According to one aspect of the present invention, it is possible to reduce a communication amount of an entire system.

## Claims

1. A relay apparatus (100) comprising:
a first communication unit (110) that communicates with a first device that is connected to a first link;
a second communication unit (120) that communicates with a second device that is connected to a second link;
a communication control unit (150) that receives, from the first device, software that is to be transmitted to the second device, and stores the received software in a storage unit; and
an update control unit (160) that updates software of the second device by transmitting the software that is stored in the storage unit (140) to the second device.

2. The relay apparatus (100) according to claim 1, wherein
a plurality of second devices of same device types are connected to the second link,
the communication control unit (150) further performs a process of storing the software in the storage unit (140) in a process of performing update by transmitting the software to any one of the second devices from the first device, and
the update control unit (160) further performs a process of updating software by transmitting the software that is stored in the storage unit (140) to a second device that is not yet updated from among the plurality of second devices.

3. The relay apparatus (100) according to claim 1, wherein
a plurality of second devices are connected to the second link,
the storage unit (140) further stores therein a device list in which the second devices are associated with device types of the second devices, and
the update control unit further performs a process of identifying, from among the plurality of second devices, a second device to which the software is to be transmitted, based on a device type that is set in the software and the device list.

4. The relay apparatus (100) according to claim 3, wherein
the device list indicates a second device to which the software is to be transmitted, and
the update control unit (160) further performs a process of identifying, from among the plurality of second devices, a second device to which the software is to be transmitted, based on the device list.

5. The relay apparatus (300) according to claim 1, further comprising:
an interface unit (370) that acquires software for updating the second device, from a third device that is connected to a third link that is different from the first link and the second link, and stores the acquired software in the storage unit (340).

6. The relay apparatus (300) according to claim 5, wherein the interface unit (370) further performs a process of acquiring software for updating the second device from an external storage device, and storing the acquired software in the storage unit (340).

7. The relay apparatus (100) according to claim 1, wherein the second device is one of a sensor device and an operation device that are installed in a plant.

8. The relay apparatus (100) according to claim 1, wherein the update control unit (160) updates software of the second device by dividing the software into pieces of software and transmitting the divided pieces of software to the second device.

9. A relay method that is implemented by a computer (100), the relay method comprising:
receiving, from a first device that is connected to a first link, software that is to be transmitted to a second device that is connected to a second link, by using a first communication unit (110) that communicates with the first device and by using a second communication unit (120) that communicates with the second device;
storing the received software in a storage unit (140); and
updating software of the second device by transmitting the software that is stored in the storage unit (140) to the second device.

10. A relay program that causes a computer (100) to execute a process, the process comprising:
receiving, from a first device that is connected to a first link, software that is to be transmitted to a second device that is connected to a second link, by using a first communication unit (110) that communicates with the first device and by using a second communication unit (120) that communicates with the second device;
storing the received software in a storage unit (140); and
updating software of the second device by transmitting the software that is stored in the storage unit (140) to the second device.
